# EUROPÄISCHE PATENTSCHRIFT

(11) **EP 0 989 952 B1**
(45) Veröffentlichungstag und Bekanntmachung des Hinweises auf die Patenterteilung: **19.09.2001**
(21) Anmeldenummer: 98934975.8
(22) Anmeldetag: 18.06.1998
(51) Int. Cl.: C01B 21/14

(54) **VERFAHREN ZUR HERSTELLUNG HOCHREINER, WÄSSRIGER HYDROXYLAMINLÖSUNGEN**
METHOD FOR PRODUCING HIGHLY PURE AQUEOUS HYDROXYLAMINE SOLUTIONS
PROCEDE DE PRODUCTION DE SOLUTIONS AQUEUSES D'HYDROXYLAMINE DE GRANDE PURETE

(30) Priorität: 18.06.1997 DE 19725851
(43) Veröffentlichungstag der Anmeldung: 05.04.2000
(73) Patentinhaber: BASF AKTIENGESELLSCHAFT, 67056 Ludwigshafen (DE)
(72) Erfinder: WATZENBERGER, Otto, D-68199 Mannheim (DE); SCHELLING, Heiner, D-67281 Kirchheim (DE); PFAB, Peter, D-67117 Limburgerhof (DE); STRÖFER, Eckhard, D-68163 Mannheim (DE)
(74) Vertreter: Kinzebach, Werner, Dr.
(86) Internationale Anmeldenummer: EP9803714
(87) Internationale Veröffentlichungsnummer: WO9857886

(56) Entgegenhaltungen:
- EP-A- 0 230 958
- US-A- 5 472 679
- R.H. PERRY: "Perry's chemical enguneers' handbook" 1985 , MCGRAWW-HILL XP002080019 siehe Seite 13-8, linke Spalte, letzter Absatz; Abbildung 3.6

## Beschreibung

Die vorliegende Erfindung betrifft ein Verfahren zur Herstellung von hochreinen, wässrigen Lösungen von freiem Hydroxylamin.

Hochreine, konzentrierte, wässrige Hydroxylaminlösungen werden unter anderem in der Elektronikindustrie, z. B. in Verbindung mit anderen Stoffen zum Vorreinigen der Platinen, verwendet. Für die Anwendung in der Elektronikindustrie werden üblicherweise Konzentrationen der Verunreinigungen, insbesondere Metallionen, weit unter 1 ppm, sogenannte "Electronic grade"-Waren, gefordert. Die zur Zeit im Handel erhältlichen, wässrigen Hydroxylaminlösungen enthalten jedoch aus der Herstellung Verunreinigungen im ppm-Bereich, wie zum Beispiel Natriumsulfat oder andere Metallverbindungen.

Hydroxylamin wird großtechnisch als Hydroxylammoniumsalz, üblicherweise als Hydroxylammoniumsulfat, hergestellt. Häufig ist aber die Anwendung einer salzfreien, wässrigen Lösung von freiem Hydroxylamin hoher Konzentration erforderlich. Um den oben genannten Problemen und insbesondere der Zersetzlichkeit des Hydroxylamins vorzubeugen, hat die Fachwelt bei der Gewinnung salzfreier Hydroxylamin-Lösungen die Anwendung klassischer Methoden der Großchemie zur Anreicherung destillierbarer Substanzen, beispielsweise die Destillation, vermieden. Die Destillation von Hydroxylamin, selbst im Labormaßstab, wird sogar als besonders gefährliche Operation bezeichnet, siehe Roth-Weller: Gefährliche Chemische Reaktionen, Stoffinformationen Hydroxylamin, S. 3, 1984, 2, Ecomed-Verlag. Die Destillation von Hydroxylamin in technischem Maßstab wurde deshalb auch nie in technischen Veröffentlichungen in Betracht gezogen. Stattdessen ist man auf Spezialmethoden ausgewichen, die jedoch alle mit gravierenden Nachteilen behaftet sind.

So wurde versucht, freies Hydroxylamin von wässrigen Salzlösungen mit Hilfe von Ionenaustauschern abzutrennen, siehe beispielsweise US-A 4,147,623, EP-A 1787, EP-A 237 052 und Z. Anorg. Ch. 288, 28 - 35 (1956). Ein derartiges Verfahren führt jedoch nur zu verdünnten Lösungen bei niedrigen Raum-Zeit-Ausbeuten. Außerdem reagiert Hydroxylamin mit vielen Ionenaustauschern oder wird von diesen zersetzt.

Eine weitere Methode besteht in der Elektrodialyse einer wässrigen Hydroxylammoniumsalzlösung in Elektrolysezellen mit semipermeablen Membranen, wie es beispielsweise in der DE-A 33 47 259, der JP-A 123 771 und der JP-A 123 772 beschrieben ist. Ein derartiges Verfahren ist jedoch technisch und wirtschaftlich aufwendig und hat bislang keinen Eingang in die Technik gefunden.

Aus der DE-A 35 28 463 ist bekannt, freies Hydroxylamin aus Hydroxylammoniumsulfat durch Behandlung mit Calcium-, Strontium- oder Bariumoxid und Abtrennung der unlöslichen Erdalkalimetallsulfate herzustellen. Bei dieser Methode bereitet die Abtrennung der feinteilig anfallenden Sulfate große Schwierigkeiten. Hinzu kommt, dass nur verdünnte Lösungen erhalten werden und dass freies Hydroxylamin bei Verwendung von Calciumoxid oder Calciumhydroxid aufgrund der relativ guten Löslichkeit des Calciumsulfats noch unerwünscht hohe Ionenmengen enthält. Bei Verwendung von Strontium- und Bariumverbindungen stehen einem technischen Produktionsverfahren zudem der relativ hohe Preis und vor allem die Toxizität entgegen.

Die DE-A 12 47 282 beschreibt ein Verfahren, bei dem man alkoholische Lösungen von freiem Hydroxylamin durch Umsetzen von Hydroxylammoniumsulfat mit Ammoniak in Alkohol als Lösungsmittel und Abtrennen des Ammoniumsulfats erhält. Ein ähnliches Verfahren beschreibt die EP-A 108 294. Für eine Reihe von Anwendungen sind alkoholische Lösungen aber ungeeignet und unerwünscht. So müssen bei der Handhabung derartiger Lösungen besondere Vorkehrungen wegen ihrer Brennbarkeit getroffen werden. Weiter muß der eingesetzte Alkohol in aller Regel aufwendig zurückgewonnen werden, da sich eine Einleitung von größeren Mengen an Alkohol in Kläranlagen oder in Vorfluter verbietet.

Schließlich beschreibt die DE-A 36 01 803 ein Verfahren zur Gewinnung von wässrigen Lösungen von freiem Hydroxylamin, bei dem man Hydroxylammoniumsulfat mit Ammoniak in niederen Alkoholen umsetzt, das ausgefallene Ammoniumsulfat abtrennt, die alkoholische Lösung von freiem Hydroxylamin mit Wasser versetzt und aus der so erhaltenen Lösung den Alkohol abdestilliert. Auch für dieses Verfahren gelten die oben genannten Nachteile beim Arbeiten mit Alkohol. Außerdem ist aufgrund der Zersetzlichkeit des Hydroxylamins in Verbindung mit der Brennbarkeit der Alkohole besondere Vorsicht in der abschließenden Destillationsstufe erforderlich.

In R.H. Perry, "Perry's chemical engineers' handbook", 1985 (McGraw-Hill), Seiten 13-5 bis 13-10 sind verschiedene Destillationsverfahren offenbart, unter anderem auch eine Primärdestillationskolonne mit einem Seitenabzug oberhalb des Sumpfes, welcher es erlaubt Dämpfe in eine Seitenkolonne abzuführen. Das Produktion Sumpf wird jedoch wieder zur Primärdestillationskolonne zurückgeführt. Eine Verwendung der Vorrichtung zur Gewinnung von hochreinem Hydroxylamin durch Aufkonzentrier und Reinigen einer wässrigen Hydroxylaminlösung wird nicht erwähnt.

Allen Verfahren des Standes der Technik ist gemeinsam, dass sie für die Durchführung in technischem Maßstab nicht geeignet sind bzw. einen unwirtschaftlich hohen zusätzlichen Sicherheitsaufwand erfordern.

Für die Zersetzung von Hydroxylamin wird eine Temperatur oberhalb von 65 °C als kritisch angesehen. Bei einer Differentialthermoanalyse wurde die Onset-Temperatur einer 50 gew.-%igen wässrigen Hydroxylaminlösung (im Glastiegel) zu 70 °C ermittelt. Die freigesetzte Wärmemenge von ca. 2,2 kJ/g 50 gew.-%iger Lösung bestätigt das hohe thermische Potential des Stoffes. Die Differentialthermoanalyse ist eine mikrothermoanalytische Methode, die als Screening zur Abschätzung der thermischen Stabilität und des thermischen Potentials herangezogen wird. Die Onset-Temperatur ist die niedrigste Umgebungstemperatur, bei der in der Probe bei einer Aufheizrate von 1 K/min, beginnend bei 30 °C, eine merkliche exotherme Reaktion abläuft. Aus Sicherheitsgründen soll die Verarbeitungstemperatur deutlich unterhalb der Onset-Temperatur liegen.

Die US-A 4,956,168 beschreibt im Rahmen der Herstellung von Hydroxylaminnitrat, dass eine Aufschlämmung von Hydroxylaminsulfat in Alkohol bei einer Temperatur, die 65 °C nicht überschreitet, hergestellt wird. Diese Aufschlämmung wird dann mit Ammoniak bei einer Temperatur ≤ 65 °C behandelt, um eine alkoholische Hydroxylaminlösung herzustellen.

Die US-A 5,472,679 wiederum beschreibt ein Verfahren zur Herstellung einer alkoholfreien, wässrigen Hydroxylaminlösung durch Umsetzung einer Hydroxylaminsulfatlösung mit einer geeigneten Base bei einer Temperatur bis etwa 60 °C. Das erhaltene Gemisch wird dann einer Destillation unter verringertem Druck bei einer Temperatur von weniger als 65 °C unterworfen. Man erhält einen festen Rückstand (das bei der Freisetzung des Hydroxylamins gebildete Salz) und als Destillat eine wässrige Hydroxylaminlösung, die 16 bis 23 Gew.-% Hydroxylamin enthält. Dieses Verfahren hat den Nachteil, dass unter Vakuum gearbeitet und die Temperatur sorgfältig kontrolliert werden muss.

Außerdem bedingt das Verfahren ein Arbeiten mit Feststoffen. Bei einem kontinuierlichen Verfahren müßte der Feststoff entsprechend kontinuierlich ausgeschleust werden. Dies kann verfahrenstechnisch große Probleme bereiten, wenn es sich, wie z. B. bei Na₂SO₄xH₂O, um einen zum Verbacken neigenden Feststoff handelt.

Ferner läuft die "Destillation" bis zur Trockene, korrekter als Eindampfen zu bezeichnen, derart ab, dass zunächst der Leichtsieder Wasser abdampft. Der Schwersieder Hydroxylamin reichert sich an. Es ist bekannt, dass die Zersetzungsneigung des Hydroxylamins mit der Konzentration an Hydroxylamin steigt. Damit steigen die Verluste an Hydroxylamin während des Prozesses. Es erhöht sich das Risiko, dass es aufgrund der hohen Konzentration an Hydroxylamin zu einer explosionsartig verlaufenden Zersetzung kommt. Es ist bekannt, dass reines Hydroxylamin bzw. Hydroxylamin > 70 Gew.-% sich explosiv zersetzt. Für den genannten Prozess sind somit entsprechende Sicherheitsanforderungen zu erfüllen.

Schließlich enthält der verbleibende Feststoff noch Restanteile an Hydroxylamin (an der Oberfläche adsorbiertes Hydroxylamin, Hydroxylamin in Feststoffzwischenräumen). Der Feststoff muss daher in einem gesonderten Entsorgungsverfahren dekontaminiert werden.

In der DE 1954775.8 wird ein Verfahren zur Herstellung von wässrigen Lösungen von freiem Hydroxylamin beschrieben, wobei man die durch Behandlung eines Hydroxylammoniumsalzes mit einer Base erhaltene Lösung durch Behandeln mit Wasser oder Wasserdampf bei einer Temperatur von > 80 °C in eine wässrige Hydroxylaminfraktion und eine Salzfraktion auftrennt. Eine gegebenenfalls gewünschte Aufkonzentrierung der erhaltenen wässrigen Hydroxylaminlösung erfolgt destillativ, durch Abdampfen von Wasser in einer Kolonne. Dabei können sich neben dem Hydroxylamin auch die schwerflüchtigen Verunreinigungen im Sumpf aufkonzentrieren. Dieses bei Sumpfprodukten generelle Problem wird in der technischen Praxis zum Beispiel durch eine weitere Destillation gelöst. Dies ist im Falle des Hydroxylamins aber problematisch, da bei einer weiteren Destillation der z. B. 50%igen Lösung eine Konzentrierung des Hydroxylamins auf über 50 Gew.-% unvermeidbar ist. Dabei steigt aber auch die Zersetzungsneigung des Hydroxylamins stark an. Die Destillation muss daher bei niedrigen Temperaturen und Drucken mit entsprechendem Aufwand und Zeitbedarf durchgeführt werden und kann üblicherweise auch nur im kleinen Maßstab erfolgen. Dementsprechend sind salzfreie, wässrige Hydroxylaminlösungen in "Electronic grade"-Reinheit nur aufwendig herstellbar und deshalb relativ teuer und ihre Anwendung ist wirtschaftlich auf wenige Einsatzbereiche eingeschränkt.

Der vorliegenden Erfindung liegt daher die Aufgabe zugrunde, ein einfaches Verfahren zur Herstellung von hochreinem Hydroxylamin mit < 1 ppm Metallionen zur Verfügung zu stellen.

Es wurde nun gefunden, dass, ausgehend von verdünnter, salzarmer Hydroxylaminlösung, durch Abziehen der hydroxylaminhaltigen Brüden über einen Seitenabzug im Sumpf der Kolonne konzentrierte, hochreine Hydroxylaminlösung mit < 1 ppm Metallionen erhältlich ist und die Aufgabe dadurch gelöst wird.

Gegenstand der vorliegenden Erfindung ist daher ein Verfahren zur Herstellung einer wässrigen Lösung von hochreinem, freiem Hydroxylamin durch Aufkonzentrieren und Reinigen einer wässrigen Hydroxylaminlösung, das dadurch gekennzeichnet ist, dass man die Aufkonzentrierung in einer Kolonne durchführt, hydroxylaminhaltige Brüden über einen Seitenabzug im Sumpf der Kolonne abzieht und hochreines Hydroxylamin durch Kondensation aus den Brüden gewinnt. Die so gewonnene, hochreine Hydroxylaminlösung enthält mehr als 20 %, bevorzugt mehr als 40 % und insbesondere mehr als 50 Gew.-% Hydroxylamin und < 1 ppm, insbesondere < 0,1 ppm Metallionen (insbesondere aus der Herstellung oder den für die Herstellung und Gewinnung verwendeten Werkstoffen).

Die für das erfindungsgemäße Verfahren als Ausgangsmaterial verwendete, wässrige Hydroxylaminlösung kann auf jede an sich bekannte Weise gewonnen werden, beispielsweise nach einem der eingangs erwähnten Verfahren. Besonders bevorzugt ist eine Gewinnung der verdünnten Hydroxylaminlösung nach dem in der DE-Patentanmeldung Nr. 1954775.8 beschriebenen Verfahren, wobei man in einer ersten Stufe a) ein Hydroxylammoniumsalz mit einer geeigneten Base in Wasser behandelt und in einer Stufe b) die erhaltene Lösung, gegebenenfalls nach Abtrennung unlöslicher Bestandteile, durch Behandlung mit Wasser oder Wasserdampf bei einer Temperatur > 80 °C in eine wässrige Hydroxylaminfraktion und eine Salzfraktion auftrennt.

Die Stufe (a) des Verfahrens wird in üblicher Weise durchgeführt. Als Hydroxylammoniumsalz kommen im allgemeinen die Hydroxylammoniumsalze von Mineralsäuren, wie z. B. der Schwefelsäure, Phosphorsäure oder Salzsäure, üblicherweise in wässriger Lösung, zur Anwendung.. Das Hydroxylammoniumsalz wird mit einer geeigneten anorganischen Base, beispielsweise Ammoniak, Natriumhydroxid, Kaliumhydroxid oder Calciumhydroxid, in wässriger Lösung umgesetzt. Die Menge der Base wird so gewählt, dass das Hydroxylammoniumsalz vollständig oder zumindest teilweise in freies Hydroxylamin überführt wird. Dies kann kontinuierlich oder diskontinuierlich und bei Temperaturen im Bereich von etwa 0 °C bis 100 °C erfolgen. Man erhält eine wässrige Lösung, die freies Hydroxylamin und das Salz enthält, das aus dem Basenkation und dem im Hydroxylammoniumsalz vorhandenen Säureanion stammt.

Je nach Art und Konzentration des Hydroxylammoniumsalzes, der zur Freisetzung des Hydroxylamins verwendeten Base und der Temperatur, bei der die Umsetzung durchgeführt wird, kann ein Teil des entstandenen Salzes ausfallen. Gegebenenfalls kann man die Lösung auch abkühlen, um eine größere Menge des Salzes auszufällen. Falls derartige unlösliche Bestandteile, d. h. Salzniederschlag, vorhanden sind, werden diese zweckmäßigerweise vor der Stufe (b) in üblicher Weise abgetrennt. Je nach Verfahrensbedingungen, z. B. bei Verwendung von Ammoniak als Base, bzw. bei Verwendung von Natriumhydroxid als Base und relativ geringer Konzentration der Reaktionspartner, fällt kein Niederschlag an.

Die Trennung der aus Stufe (a) erhaltenen Lösung in Stufe (b) in eine wässrige Hydroxylaminfraktion und eine Salzfraktion erfolgt vorzugsweise durch Behandeln mit Wasser oder Wasserdampf in einer Stripkolonne. Im Allgemeinen verwendet man als Stripkolonne eine übliche Bodenkolonne, z. B. Glocken- oder Siebbodenkolonne, oder eine Kolonne mit anderen üblichen Kolonneneinbauten, z.B. Schüttungen oder geordneten Packungen. Sie weist vorzugsweise eine theoretische Bodenzahl im Bereich von 5 bis 70 auf. Die Zuleitung der stabilisierten Lösung, die gegebenenfalls mit weiterem Stabilisator versetzt werden kann, erfolgt direkt auf den Kopf der Kolonne (Oberteil der Packung oder oberster Boden).

In der Stripkolonne erfolgt die Zerlegung der Lösung derart, dass die Salzfraktion am Sumpf der Kolonne und eine wässrige Hydroxylaminfraktion in Höhe des Zulaufbodens oder oberhalb davon, insbesondere über Kopf abgezogen wird. Um dies zu erreichen, ist es bevorzugt, die Lösung durch Einleiten von Wasser und/oder Wasserdampf in den Kolonnensumpf im Gegenstrom zu behandeln. Bei einer Hydroxylaminkonzentration von 5 bis 45 Gew.-% in der Feedlösung beträgt der Mengenstrom an Wasser bzw. Wasserdampf im Allgemeinen das 1- bis 8fache, insbesondere das 1- bis 5fache der Feedmenge.

Die Temperatur des eingeleiteten Wassers oder Wasserdampf liegt im Allgemeinen im Bereich von 80 bis 180 °C. Gegebenenfalls wird der Sumpf der Kolonne zusätzlich beheizt. Die im Kopf der Stripkolonne herrschenden Temperaturen richten sich nach dem Druck, bei dem die Kolonne betrieben wird. Dieser Druck beträgt im Allgemeinen 5 bis 300 kPa (0,05 bis 3 bar), vorzugsweise 50 bis 300 kPa (0,5 bis 3 bar). Besonders bevorzugt ist es, die Stripkolonne bei einem Druck im Bereich von 50 bis 150 kPa (0,5 bis 1,5 bar) zu betreiben. Die Temperaturen im Kopf der Stripkolonne liegen demgemäß im Allgemeinen im Bereich von 80 bis 130 °C, vorzugsweise 90 bis 120 °C. Die Temperatur des eingeleiteten Wasserdampfs kann deutlich höher liegen, zum Beispiel auch bei 150 °C. Sie sollte jedoch vorteilhafterweise nicht so hoch sein, dass zu viel Wasser aus der Salzlösung mitverdampft und das Salz im Kolonnensumpf auszufallen beginnt.

Gegebenenfalls wird über dem Zulaufboden oder im Brüdenabzug noch ein Tröpfchenabscheider (Demister) derart installiert, dass ein Mitreißen des Salzes durch Tröpfchen verhindert wird.

In dem erfindungsgemäßen Verfahren wird die über Kopf aus der Stripkolonne abgezogene wässrige Hydroxylaminfraktion, die üblicherweise 10 bis 200 g Hydroxylamin/Liter enthält, auf die gewünschte Endkonzentration von etwa 50 Gew.-% aufkonzentriert. Zweckmäßigerweise verwendet man dazu eine übliche Füllkörperkolonne mit den oben genannten Füllkörpern oder eine geeignete Bodenkolonne. Eine Kolonne mit einer theoretischen Bodenzahl von 4 bis 30 ist bevorzugt. Vorteilhaft wird ein Fallfilmverdampfer zum Beheizen des Kolonnensumpfes verwendet, es lassen sich aber auch andere übliche Sumpfbeheizer, wie Natur- oder Zwangsumlaufverdampfer, Plattenwärmetauscher etc. einsetzen.

Im Allgemeinen arbeitet man in der Aufkonzentrationskolonne mit einem Druck im Bereich von 1 bis 200 kPa (0,01 bis 2 bar), vorzugsweise 5 bis 120 kPa (0,05 bis 1,2 bar) und besonders bevorzugt 30 bis 110 kPa (0,3 bis 1,1 bar).

Die verdünnte Hydroxylaminlösung wird dabei an geeigneter Stelle, zum Beispiel auf Höhe der Böden 1 bis 10, der Aufkonzentrationskolonne zugeführt. Gleichzeitig kann zur weiteren Stabilisierung der Hydroxylaminlösung weiterer Stabilisator am Kopf der Kolonne zugeführt werden. Das aus der Hydroxylaminlösung abdestillierte Wasser wird am Kopf der Kolonne abgezogen und enthält typischerweise weniger als 0,06 % Hydroxylamin. Der Seitenabzug, über den die hydroxylaminhaltigen Brüden zur Gewinnung der hochkonzentrierten, hochreinen Hydroxylaminlösung abgezogen werden, ist vorzugsweise unterhalb des ersten Bodens, jedoch so, dass keine Tröpfchen mitgerissen werden, angebracht. Dies wird beispielsweise durch Einbau eines Demisters bewirkt. Am Sumpf der Kolonne fällt eine stärker mit Salz verunreinigte Hydroxylaminlösung an. Ihre Reinheit hängt von den jeweiligen Mengen, die über den Seiten- und den Sumpfabzug entnommen werden, ab. Die über den Seitenabzug zur Erzeugung hochreiner, wässriger Hydroxylaminlösung abgezogene Menge wird zusätzlich durch den Mindestbrüdenstrom in der Kolonne begrenzt, der für den hydrodynamisch stabilen Betrieb erforderlich ist. Eine vorteilhafte Ausführungsform des erfindungsgemäßen Verfahrens besteht darin, die Brüden im Sumpf der Kolonne aus dem Ablauf des Fallfilmverdampfers, der zur Beheizung des Sumpfes verwendet wird, abzuziehen.

Die über den Seitenabzug aus dem Sumpf der Kolonne abgezogene Hydroxylaminlösung wird erfindungsgemäß in einem Kondensator in die konzentrierte, hochreine, wässrige Hydroxylaminlösung mit Verunreinigungen < 1 ppm und hydroxylaminhaltigen Wasserdampf aufgetrennt. Die über Kopf des Kondensators abgehenden Brüden können zur Rückgewinnung des noch enthaltenen Hydroxylamins an geeigneter Stelle, zum Beispiel auf Höhe der Böden 1 bis 10, wieder in die Kolonne zurückgeführt werden.

Bei einer besonders vorteilhaften Ausführungsform des erfindungsgemäßen Verfahrens wird unterhalb des Zulaufs der über den Seitenabzug abgezogenen Brüden in den Kondensator ein Verdampfer angebracht, so dass durch Verdampfen eines Teils des Wassers in der hochreinen, wässrigen Hydroxylaminlösung, deren Konzentration auf die gewünschte Endkonzentration eingestellt werden kann. Die erzeugten wasserdampfreichen Brüden können wiederum zur Rückgewinnung des noch enthaltenen Hydroxylamins an geeigneter Stelle in die Kolonne zurückgeführt werden.

In einer weiteren, ganz besonders bevorzugten Ausführungsform des erfindungsgemäßen Verfahrens werden die aus dem Sumpf der Aufkonzentrationskolonne abgezogenen Brüden in eine Seitenkolonne mit Sumpfverdampfer geleitet. Dadurch kann der Hydroxylamingehalt in dem zur Aufkonzentrationskolonne zurückgeführten Brüdenstrom weiter gesenkt werden und die Kreislaufmenge an Brüden zwischen Aufkonzentrationskolonne und der "Electronic grade"-Seitenanlage wird deutlich verringert. Die Verwendung der Seitenkolonne erlaubt zudem bis zu 99 % der Hydroxylaminlösung über den Seitenabzug aus dem Sumpf als "Electronic grade"-Ware abzuziehen, während die restlichen, etwa 1 %, in diesem Fall stark verunreinigter Hydroxylaminlösung über den Sumpf der Aufkonzentrationskolonne abgezogen werden müssen. Diese geringe Menge kann jedoch zur Rückgewinnung des Hydroxylamins in Stufe (b) des Verfahrens zur Salzabtrennung gemäß der DE 1954775.8 zurückgeführt werden.

Um eine besonders niedrige Metallionenkonzentration im Hydroxylamin zu erzielen, können die Anlagenteile des Seitenabzugs aus metallionenfreien und hydroxylaminbeständigen Werkstoffen gefertigt sein, z. B. aus Kunststoffen, wie Polypropylen oder Polytetrafluorethylen (PTFE).

Bei Verwendung einer Kondensator-Verdampfereinheit zur Gewinnung der hochreinen Hydroxylaminlösung können bei einem Mengenstromverhältnis des Brüdenabzugs aus dem Sumpf zu der als Kondensat aus dem Sumpf des Seitenabzugs abgezogenen Menge von 10:1 bis zu 60 % der Hydroxylaminlösung als 50 gew.-%ige "Electronic grade"-Ware abgezogen werden, ohne dass die Aufkonzentrationskolonne in ihrem Destillationsverhalten beeinflusst wird. Die restlichen 40 % werden als 50%ige Hydroxylaminlösung mit Standardgehalt an Salz erhalten. Bei Verwendung einer Seitenkolonne kann bereits ab einem Mengenstromverhältnis des Brüdenabzugs in die Seitenstromkolonne zur produzierten Menge an "Electronic grade"-Ware von unter 6:1 bis zu 99 % der aufkonzentrierten Hydroxylaminlösung über den Seitenabzug aus dem Sumpf als "Electronic grade"-Ware gewonnen werden.

Das erfindungsgemäße Verfahren kann daher gleichzeitig wechselnde Mengen an Standard- und "Electronic grade"-Ware liefern, so dass eine schnelle Anpassung an die Erfordernisse des Marktes möglich ist. Es ist weiterhin erstmalig möglich, hochreine, wässrige Hydroxylaminlösung in "Electronic grade"-Qualität unter kontinuierlichen Bedingungen im großtechnischen Maßstab zu wirtschaftlich günstigen Konditionen sicher herzustellen. Der bei der Kleinproduktion unvermeidliche, ständige manuelle Umgang mit den stark sensibilisierenden Hydroxylaminlösungen wird vermieden. Auch die Handhabung höherkonzentrierter, d. h. über 50 gew.-%iger Hydroxylaminlösungen entfällt. Dies bedingt ein hohes Maß an prozessimmanenter Arbeitssicherheit.

Lösungen, die freies Hydroxylamin enthalten, können durch Zusatz eines üblichen Zersetzungsstabilisators stabilisiert werden.

Die Figuren 1 bis 3 veranschaulichen beispielhaft einige Ausführungsformen des erfindungsgemäßen Verfahrens.

Figur 1 zeigt eine schematische Darstellung einer Aufkonzentrationsanlage zur Gewinnung von hochreinem Hydroxylamin.

Figur 2 zeigt eine schematische Darstellung einer Seitenabzugsanlage.

Figur 3 zeigt eine schematische Darstellung einer weiteren Ausführungsform einer Seitenabzugsanlage.

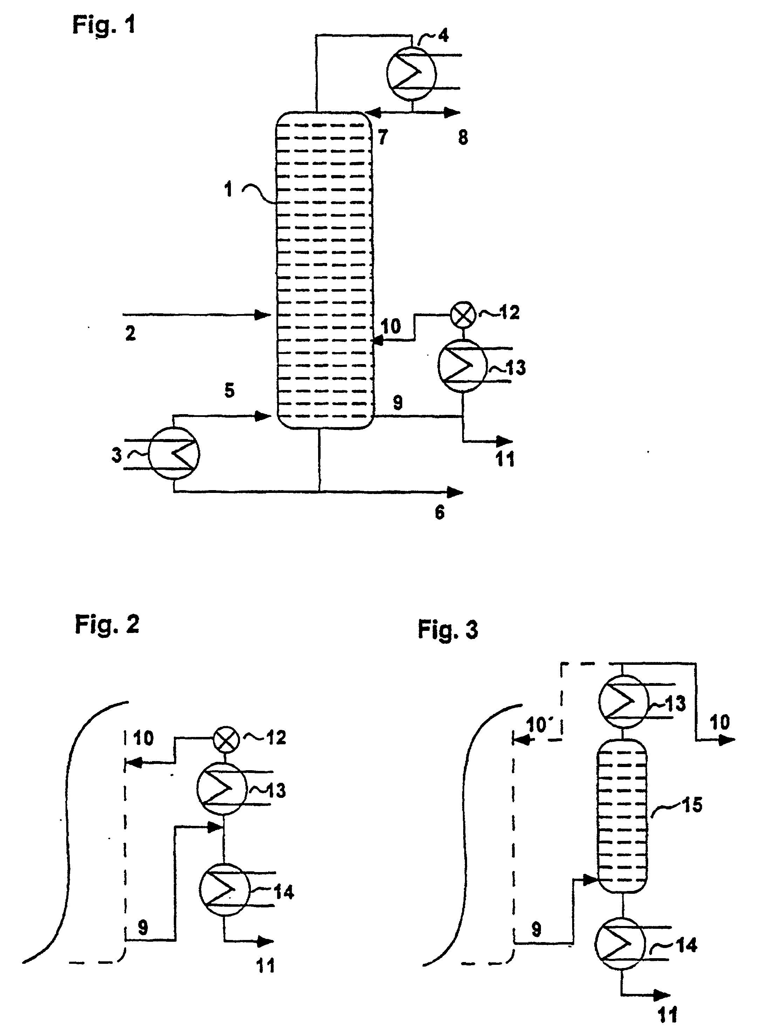

In Figur 1 ist eine Aufkonzentrationskolonne 1 gezeigt. Verdünnte, wässrige Hydroxylaminlösung 2 wird etwa in der Mitte der Kolonne 1 zugeführt. Am Kopf der Kolonne 1 wird Wasser abdestilliert, in einem Kondensator 4 kondensiert und entsprechend dem eingestellten Rücklaufverhältnis wird Wasser über die Leitung 8 entnommen und in die Kolonne über die Leitung 7 zurückgeführt. Im Sumpf der Kolonne wird salzhaltige Hydroxylaminlösung 6 abgezogen und zum Teil über einen Verdampfer 3 wieder in den Sumpf der Kolonne zurückgeführt. Zur Gewinnung der hochreinen Hydroxylaminlösung ist im Sumpf der Kolonne ein Seitenabzug angebracht, über den hydroxylaminhaltige Brüden 9 entnommen und dann in einem Kondensator 13 kondensiert werden. Die hochreine Hydroxylaminlösung 11 wird unterhalb des Kondensators 13 entnommen und hydroxylaminhaltiger Wasserdampf 10 über einen Mengenregler 12 in die Kolonne 1 zurückgeführt.

In Figur 2 ist eine bevorzugte Seitenabzugsanlage des erfindungsgemäßen Verfahrens gezeigt. Die aus der nur angedeuteten Aufkonzentrationskolonne 1 über den Seitenabzug im Sumpf entnommenen Brüden 9 werden unterhalb eines Kondensators 13 und oberhalb eines Verdampfers 14 in die Seitenanlage eingebracht. Durch teilweises Verdampfen der in dem Kondensator 13 kondensierten Hydroxylaminlösung in dem Verdampfer 14 kann die Konzentration der hochreinen Hydroxylaminlösung 11 an Hydroxylamin variiert werden. Die an Hydroxylamin angereicherten Brüden 10 können wiederum über einen Mengenregler 12 in die Aufkonzentrationskolonne 1 zurückgeführt werden.

Die in Figur 3 dargestellte, besonders bevorzugte Ausführungsform umfasst eine zusätzliche Kolonne in der Seitenabzugsanlage. Die im Sumpf der Aufkonzentrationskolonne 1 (nur angedeutet) abgezogenen hydroxylaminhaltigen Brüden 9 werden in Sumpfnähe in eine Seitenkolonne 15 geleitet. Am Kopf dieser Kolonne wird hydroxylaminhaltiges Wasser 10 mit einem Kondensator 13 kondensiert und in die Aufkonzentrationskolonne 1 zurückgeführt. Aus dem Sumpf der Seitenkolonne 15 wird hochreine Hydroxylaminlösung 11 gewonnen. Gemäß dieser besonders bevorzugten Ausführungsform der Erfindung können bis zu 99 % des der Aufkonzentrationskolonne 1 zugeführten Hxdroxylamins 2 als "Electronic grade"-Ware 11 gewonnen werden.

Die nachfolgenden Beispiele erläutern die Erfindung unter Bezug auf Figur 1 ohne sie zu begrenzen.

### Beispiel 1

In eine Glasglockenbodenkolonne 1 mit 50 mm Durchmesser und 30 Glockenböden wurden auf den achten Boden kontinuierlich 1600 g/h einer 3,2 gew.-%igen, wässrigen, weitgehend salzfreien, stabilisierten Hydroxylaminlösung 2 eingespeist. Die Kolonne wurde bei 300 mbar betrieben. Auf den obersten Boden, Nr. 30, wurde zusätzlich eine geringe Menge an Stabilisator, die in Hydroxylaminlösung gelöst war, in die Kolonne 1 dosiert. Über Kopf der Kolonne 1 wurde Wasser 8 abdestilliert, das Rücklaufverhältnis betrug dabei 0,5. Das Destillat enthielt noch eine Restmenge an 0,06 Gew.-% Hydroxylamin. Aus dem Sumpf der Kolonne wurden ca. 75 ml/h einer 50 gew.-%igen Hydroxylaminlösung 6 über eine Pumpe ausgetragen. Der Sumpfaustrag enthielt bis zu 45 ppm Natriumsulfat. Am Sumpf der Kolonne war weiterhin unterhalb des ersten Bodens ein Übergang zu einem seitlich angeordneten Kondensator 13 angebracht. Durch den Gegendruck der Kolonne, verursacht durch den Druckverlust über die Siebböden, wurde Brüden aus dem Sumpf der Aufkonzentrationskolonne 1 in den seitlich angebrachten Kondensator 13 gedrückt. Per Handventil 12 am Kopfausgang des Kondensators 13 wurde der Mengenstrom der Brüden begrenzt. Der über Kopf des Kondensators abgehende Brüden 10 wurde auf den achten Boden der Aufkonzentrationskolonne 1 geleitet. Im Kondensator 13 wurden ca. 18 ml/h ca. 20 bis 35 gew.-%ige Hydroxylaminlösung 11 auskondensiert und mittels einer Laborpumpe in eine separate Vorlage gefördert. Diese Lösung wurde kontinuierlich mit Stabilisator versetzt. Die Konzentration der Metallionen lag unter 0,1 ppm.

### Beispiel 2

In einer Glockenbodenkolonne, H = 5m, D = 0,3 m aus Glas wurde bei ca. 77 °C und 0,3 bar eine ca. 10 gew.-%ige Hydroxylaminlösung auf 50 Gew.-% aufkonzentriert. Aus dem Sumpf der Kolonnne wurde über PTFE-Leitungen Brüden abgezogen und in einen seitlich angebrachten 51-Vorratsbehälter mit Doppelmantelkühlung eingeleitet. Darin wurde ein Teil der Brüden auskondensiert. Die nichtkondensierten Brüden wurden über eine Brüdenleitung aus PTFE wieder in den 5. Boden der Kolonne zurückgeführt. Die Brüdenmenge wurde von Hand mittels eines Drosselventils begrenzt. Der auskondensierte Brüden in der gekühlten Vorlage wurde anschließend auf 50 Gew.-% aufkonzentriert (hochreines Produkt).

Die erzeugten Hydroxylaminlösungen (jeweils 50 Gew.-%) hatten folgende Zusammensetzung (Metallgehalt in mg/kg; Analysengenauigkeit: 0,1 mg/kg):

| | Standardware (ohne Seitenabzug) | Hochreines Produkt (mit Seitenabzug) |
|---|---|---|
| Bor | 3,0 | <0,1 |
| Natrium | 9,0 | <0,1 |
| Kalium | 0,3 | <0,1 |
| Kalzium | 0,2 | <0,1 |
| Aluminium | 1,0 | <0,1 |
| Silizium | 24,0 | <0,1 |
| Eisen | 0,1 | <0,1 |
| Gesamtmetalle | 38 | <0,1 |

Alle Metallionenkonzentrationen im hochreinen Produkt waren unterhalb der Nachweisgrenze von 0,1 mg/kg. Die geforderte Reinheit von <0,1 mg Metalle / kg Lösung wurde sicher erreicht.

In einem weiteren Versuch wurde eine Hydroxylaminlösung durch Aufkonzentration in der Glockenbodenkolonne ohne Seitenabzug hergestellt (Standardware).

## Patentansprüche

1. Verfahren zur Herstellung hochreiner, wässriger Hydroxylaminlösung, durch Aufkonzentrieren und Reinigen einer wässrigen Hydroxylaminlösung, das **dadurch gekennzeichnet** ist, dass man die Aufkonzentrierung in einer Kolonne durchführt, hydroxylaminhaltige Brüden über einen Seitenabzug im Sumpf der Kolonne abzieht und hochreines Hydroxylamin durch Kondensation aus den Brüden gewinnt.

2. Verfahren gemäß Anspruch 1, **dadurch gekennzeichnet, dass** man die zum Aufkonzentrieren und Reinigen vorgesehene Hydroxylaminlösung gewinnt, indem man
a) ein Hydroxylammoniumsalz mit einer geeigneten Base in Wasser behandelt,
b) die erhaltene Lösung, gegebenenfalls nach Abtrennung unlöslicher Bestandteile, durch Behandlung mit Wasser oder Wasserdampf bei einer Temperatur < 80 °C in eine wässrige Hydroxylaminfraktion und eine Salzfraktion auftrennt.

3. Verfahren gemäß Anspruch 1 oder 2, **dadurch gekennzeichnet, dass** die Kondensation der hochreinen Hydroxylaminlösung erfolgt, indem man die über den Seitenabzug abgezogenen hydroxylaminhaltigen Brüden unterhalb eines Kondensators und oberhalb eines Verdampfers einbringt und die im Kondensator kondensierte Hydroxylaminlösung im Verdampfer teilweise wieder verdampft, so dass man eine höher konzentrierte hochreine Hydroxylaminlösung erhält.

4. Verfahren gemäß Anspruch 1 oder 2, **dadurch gekennzeichnet, dass** man die über einen Seitenabzug im Sumpf der Kolonne abgezogenen hydroxylaminhaltigen Brüden in eine Seitenkolonne einspeist und hochreine Hydroxylaminlösung am Sumpf der Seitenkolonne gewinnt.

5. Verfahren nach einem der vorhergehenden Ansprüche, **dadurch gekennzeichnet, dass** der Seitenabzug gasseitig wieder mit der Aufkonzentrationskolonne verbunden ist.

6. Verfahren nach einem der vorhergehenden Ansprüche, **dadurch gekennzeichnet, dass** man für die Anlagenteile des Seitenabzugs metallionenfreie und hydroxylaminbeständige Werkstoffe verwendet.

## Claims

1. A process for the preparation of very pure, aqueous hydroxylamine solution by concentrating and purifying an aqueous hydroxylamine solution, wherein the concentration is carried out in a column, hydroxylamine-containing vapors are removed via a side take-off in the bottom of the columning and very pure hydroxylamine is obtained by condensing the vapors.

2. A process as claimed in claim 1, wherein the hydroxylamine solution intended for concentration and purification is obtained by
a) treating a hydroxylammonium salt with a suitable base in water and,
b) separating the solution obtained, if necessary after removal of insoluble components, into an aqueous hydroxylamine fraction and a salt fraction by treatment with water or steam at < 80 °C.

3. A process as claimed in claim 1 or 2, wherein the condensation of the very pure hydroxylamine solution is effected by introducing the hydroxylamine-containing vapors, removed via the side take-off, below a condenser and above an evaporator and partially evaporating again in the evaporator the hydroxylamine solution condensed in the condenser, so that a more highly concentrated very pure hydroxylamine solution is obtained.

4. A process as claimed in claim 1 or 2, wherein the hydroxylamine-containing vapors taken off via a side take-off in the bottom of the column are passed into a side column and very pure hydroxylamine solution is obtained at the bottom of the side column.

5. A process as claimed in any of the preceding claims, wherein the side take-off is connected on the gas side to the concentration column.

6. A process as claimed in any of the preceding claims, wherein materials free of metal ions and resistant to hydroxylamine are used for the parts of the side take-off plant.

## Revendications

1. Procédé de préparation de solutions aqueuses d'hydroxylamines à haute pureté par concentration et épuration d'une solution aqueuse d'hydroxylamine, **caractérisé en ce que** l'on entreprend la concentration dans une colonne, que l'on extrait des vapeurs chargées d'hydroxylamine via un soutirage latéral en fond de colonne, et que l'on obtient une hydroxylamine à haute pureté par condensation à partir des vapeurs.

2. Procédé selon la revendication 1, **caractérisé en ce que** la solution d'hydroxylamine à concentrer et à épurer est obtenue comme suit:
a) traitement d'un sel d'hydroxylammonium par une base appropriée en eau,
b) la solution obtenue est, après éventuelle séparation des constituants insolubles, séparée en une fraction d'hydroxylamine et une fraction saline, par traitement à l'eau ou à la vapeur d'eau, à une température inférieure à 80°C.

3. Procédé selon la revendication 1 ou 2, **caractérisé en ce que** l'on entreprend la condensation de la solution d'hydroxylamine à haute pureté en introduisant les vapeurs chargées d'hydroxylamine, extraites via le soutirage latéral, en aval d'un condenseur et en amont d'un évaporateur, et que la solution d'hydroxylamine condensée dans le condenseur est à nouveau partiellement évaporée dans l'évaporateur, de sorte que l'on obtient une solution d'hydroxylamine à haute pureté plus concentrée.

4. Procédé selon la revendication 1 ou 2, **caractérisé en ce que** l'on envoie les vapeurs chargées d'hydroxylamine extraites par le soutirage latéral en fond de colonne dans une colonne latérale, et que l'on obtient, dans le fond de la colonne latérale, une solution d'hydroxylamine à haute pureté.

5. Procédé selon l'une des revendications ci-avant, **caractérisé en ce que** le soutirage latéral est reconnecté du côté gaz à la colonne de concentration.

6. Procédé selon l'une des revendications ci-avant, **caractérisé en ce que** l'on utilise, pour les composants du soutirage latéral, des matériaux exempts d'ions métalliques et résistant aux hydroxylamines.
